# EUROPÄISCHE PATENTSCHRIFT

(11) **EP 3 171 010 B1**
(45) Veröffentlichungstag und Bekanntmachung des Hinweises auf die Patenterteilung: **24.11.2021**
(21) Anmeldenummer: 16196222.0
(22) Anmeldetag: 28.10.2016
(51) Int. Cl.: F02M 26/54, F02M 26/67, F02M 26/70, F02D 9/06, F02D 9/10, F16K 1/22, F16K 31/04

(54) **ELEKTRISCHE ABGASKLAPPENEINRICHTUNG**
ELECTRIC EXHAUST VALVE DEVICE
DISPOSITIF DE CLAPET ÉLECTRIQUE DES GAZ BRÛLÉS

(30) Priorität: 17.11.2015 DE 102015222609
(43) Veröffentlichungstag der Anmeldung: 24.05.2017
(73) Patentinhaber: Purem GmbH, 66539 Neunkirchen (DE)
(72) Erfinder: STARK, Annika, 73249 Wernau (DE); SCHMITT, Steffen, 73760 Ostfildern (DE); BIRGLER, Markus, 73249 Wernau (DE); VARELIS, Stefanos, 70771 Leinfelden (DE); GRÜN, Matthias, 73776 Altbach (DE); NOVOSEL, Miljenko, 70188 Stuttgart (DE)
(74) Vertreter: BRP Renaud & Partner mbB Rechtsanwälte Patentanwälte Steuerberater

(56) Entgegenhaltungen:
- EP-A1- 2 085 601
- WO-A1-2008/043600
- DE-A1-102009 016 597
- DE-A1-102010 037 673
- DE-A1-102011 107 088
- DE-A1-102013 103 105
- DE-B3-102014 113 332

## Beschreibung

Die vorliegende Erfindung betrifft eine elektrische Abgasklappeneinrichtung zum Steuern eines durchströmbaren Querschnitts eines Abgasrohrs einer Abgasanlage einer Brennkraftmaschine. Die vorliegende Erfindung betrifft außerdem einen mit einer derartigen elektrischen Abgasklappeneinrichtung ausgestatteten Schalldämpfer bzw. eine mit einer solchen Abgasklappeneinrichtung ausgestattete Abgasanlage.

Abgasklappeneinrichtungen kommen bei Abgasanlagen für verschiedene Funktionen in Betracht. Beispielsweise kann mit Hilfe einer Abgasklappeneinrichtung in einem Abgasrohr der Abgasgegendruck gezielt vorübergehend erhöht werden. Dies kann z.B. zum Verbessern bzw. zum Ermöglichen einer Abgasrückführung durchgeführt werden. Häufig kommen Abgasklappeneinrichtungen zum Einsatz, um für Betriebszustände einer Brennkraftmaschine, bei denen große Abgasmengen anfallen, innerhalb der Abgasanlage einen zusätzlichen Abgaspfad zu öffnen, der bei kleinen Abgasmengen gesperrt ist. Die Begriffe "groß" und "klein" sind dabei in Relation zueinander zu verstehen. Hierdurch kann beispielsweise eine Abgasanlage hinsichtlich Gegendruck und Dämpfungswirkung an unterschiedliche Betriebszustände der Brennkraftmaschine angepasst werden. Bei Teillast kann mit Hilfe der Abgasklappeneinrichtung ein Abgaspfad gesperrt werden, beispielsweise, um eine besonders effiziente Schalldämpfung zu erreichen. Bei Volllast wird dagegen besagter Abgaspfad geöffnet, um den Gegendruck der Abgasanlage zu reduzieren, was die Leistungsentfaltung der Brennkraftmaschine für Antriebszwecke erhöht. Insbesondere können derartige Abgasklappeneinrichtungen an oder in Schalldämpfern realisiert werden, um dort mindestens einen von zwei oder mehr Abgaspfaden steuern zu können. Die Steuerbarkeit des jeweiligen durchströmbaren Querschnitts des jeweiligen Abgasrohrs umfasst zumindest eine Offenstellung, in welcher der durchströmbare Querschnitt des Abgasrohrs minimal reduziert ist, und eine Schließstellung, in welcher der durchströmbare Querschnitt des Abgasrohrs maximal reduziert ist. Je nach Ausgestaltung der Abgasklappeneinrichtung und je nach Anwendungsfall können auch eine oder mehrere oder beliebige Zwischenstellungen einstellbar sein. In der Schließstellung kann der zu steuernde Querschnitt vollständig oder bis auf einen gewünschten Klappenbypass verschlossen sein. Dieser Klappenbypass kann z.B. für eine Notlaufeigenschaft der Abgasanlage bei Ausfall der Abgasklappeneinrichtung in der Schließstellung erwünscht sein.

Während eine Abgasklappeneinrichtung grundsätzlich einen beliebigen Antrieb aufweisen kann, ist die hier relevante elektrische Abgasklappeneinrichtung mit einem Elektroantrieb ausgestattet, bei dem es sich beispielsweise um einen Elektromotor mit oder ohne Getriebeübersetzung handelt. Der Elektroantrieb weist eine Abtriebswelle auf, die vom Elektroantrieb um eine Drehachse drehend antreibbar ist. Die Abgasklappeneinrichtung ist ferner mit einer Abgasklappe ausgestattet, die eine Klappenblende und eine koaxial zur Drehachse ausgerichtete Antriebswelle aufweist und die zum Steuern des zu steuernden Querschnitts um die Drehachse verdrehbar ist. Zweckmäßig sind nun die Abtriebswelle und die Antriebswelle zur Übertragung von Drehmomenten auf geeignete Weise miteinander gekoppelt, wozu grundsätzlich eine hierfür geeignete Kopplungseinrichtung zum Einsatz kommen kann. DE 10 2014 113332 B offenbart ein Beispiel einer bekannten Kopplungseinrichtung.

Problematisch bei derartigen elektrischen Abgasklappeneinrichtungen ist häufig die thermische Belastung des Elektroantriebs. Im Betrieb der Abgasanlage kann sich die Abgasklappe, die unmittelbar dem heißen Abgasstrom ausgesetzt ist, aufheizen. Gleichzeitig erfolgt dabei auch ein Wärmeeintrag in die Antriebswelle. Über die Kopplungseinrichtung gelangt die Wärme auch zur Abtriebswelle und über diese in den thermisch empfindlichen Elektroantrieb. Auch kann die thermisch Bedingte Ausdehnung der Antriebswelle über die jeweilige Kopplungseinrichtung zu einer hohen axialen mechanischen Belastung des Elektroantriebs führen.

Die vorliegende Erfindung beschäftigt sich mit dem Problem, für eine elektrische Abgasklappeneinrichtung der vorstehend beschriebenen Art bzw. für eine damit ausgestattete Abgasanlage bzw. für einen damit ausgestatteten Schalldämpfer eine verbesserte Ausführungsform anzugeben, die sich insbesondere durch eine reduzierte thermische Belastung des Elektroantriebs auszeichnet. Ferner ist eine zuverlässige Funktionsweise der Abgasklappeneinrichtung angestrebt, wobei insbesondere eine zuverlässige Positionierung der Abgasklappe in der jeweils eingestellten Steuerstellung erwünscht ist. Außerdem ist eine preiswerte Herstellbarkeit angestrebt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Kopplungseinrichtung mit einem Verbindungselement, mit einem Übertragungselement und mit einer Vorspannfeder auszustatten. Das Verbindungselement ist drehfest mit der Antriebswelle verbunden. Das Übertragungselement ist einerseits drehfest und axial verstellbar mit der Abtriebswelle und andererseits drehfest und axial verstellbar mit dem Verbindungselement verbunden. Die Vorspannfeder ist am Verbindungselement und/oder an der Antriebswelle sowie am Übertragungselement jeweils axial abgestützt und dabei so konfiguriert, dass sie das Übertragungselement gegen die Abtriebswelle axial antreibt bzw. vorspannt.

Mit Hilfe des axial zwischen Abtriebswelle und Antriebswelle axial verstellbar angeordneten Übertragungselements lassen sich thermische Dehnungseffekte, die zu einer Ausdehnung der Antriebswelle in Richtung zur Abtriebswelle führen, kompensieren, ohne dass es dabei zu einer unzulässig hohen axialen Belastung der Abtriebswelle bzw. des Elektroantriebs kommt. Des Weiteren wird über die Mehrteiligkeit der Kopplungseinrichtung erreicht, dass nur über die Kontaktstellen der einzelnen Komponenten der Kopplungseinrichtung innerhalb der Kupplungseinrichtung eine Wärmeübertragung erfolgen kann, wodurch der durch Wärmeleitung ermöglichte Wärmestrom von der Antriebswelle durch die Kopplungseinrichtung zur Abtriebswelle reduziert ist.

Entsprechend einer besonders vorteilhaften Ausführungsform kann das Übertragungselement einen, insbesondere zylindrischen, Körper aufweisen, der axial geschlossen ist. Der axial geschlossene Körper ist in der Axialrichtung somit blickdicht, wodurch die Gefahr einer Wärmestrahlung von der Antriebswelle durch den Körper des Übertragungselements zur Abtriebswelle signifikant reduziert ist. Insbesondere steht durch den axial geschlossenen Körper kein direkter, geradliniger, axialer Ausbreitungsweg für Wärmestrahlung der Antriebswelle in Richtung zur Abtriebswelle zur Verfügung. Hierdurch lässt sich die thermische Belastung der Abtriebswelle und somit des Elektroantriebs signifikant reduzieren. Durch die axial geschlossene bzw. blickdichte Ausgestaltung des Körpers existiert innerhalb des Körpers keine durchgehende offene Verbindung, die sowohl an einer der Abtriebswelle zugewandten Vorderseite des Körpers als auch an einer der Antriebswelle zugewandten Rückseite des Körpers offen mündet.

Vorzugsweise kann dabei das Übertragungselement optional einen, insbesondere zylindrischen, Körper aufweisen, der zumindest in einem senkrecht zur Axialrichtung verlaufenden Querschnitt eine ringförmig, insbesondere kreisringförmig, geschlossen umlaufende Außenkontur besitzt, wobei der Körper in diesem Querschnitt radial innerhalb der Außenkontur axial vollständig geschlossen, alo blickdicht ist.

Zusätzlich oder alternativ kann vorgesehen sein, dass das Übertragungselement einen Körper aufweist, der in seinem Inneren keine axial durchgehende Öffnung aufweist. Auch hierdurch wird eine Wärmestrahlung durch den Körper hindurch vermieden.

Bei einer anderen vorteilhaften Ausführungsform kann das Übertragungselement einen, insbesondere zylindrischen, Körper aufweisen, der an einer der Abtriebswelle zugewandten Vorderseite eine Eingriffskontur aufweist, die mit einer an der Abtriebswelle ausgebildeten Gegeneingriffskontur drehfest und axial verstellbar in Eingriff steht. Eingriffskontur und Gegeneingriffskontur sind demnach geometrisch so geformt, dass Drehmomente zwischen Abtriebswelle und Übertragungselement übertragen werden. Die Eingriffskontur ist in der Vorderseite zweckmäßig durch mindestens eine axiale Vertiefung ausgebildet, in welche die am stirnseitigen Ende der Abtriebswelle ausgebildete Gegeneingriffskontur axial eingreift. Besonders vorteilhaft ist auch hier, wenn diese Vertiefung den Körper des Übertragungselements in Axialrichtung nicht durchdringt, so dass der Körper zumindest im Bereich der Eingriffskontur axial geschlossen ist.

Bei einer anderen vorteilhaften Ausführungsform kann das Übertragungselement einen, insbesondere zylindrischen, Körper aufweisen, der an einer der Antriebswelle zugewandten Rückseite eine, vorzugsweise vertiefte, Federaufnahme aufweist, in der sich die Vorspannfeder axial am Körper abstützt. Hierdurch wird für die Vorspannfeder am Übertragungselement eine definierte Positionierung geschaffen, beispielsweise, um eine Zentrierung zwischen Antriebswelle und Abtriebswelle konzentrisch zur Drehachse zu bewirken.

Bei einer anderen Ausführungsform kann die Vorspannfeder einerseits am Übertragungselement und andererseits am Verbindungselement und/oder an der Antriebswelle unter Torsionsvorspannung drehfest abgestützt sein. Mit anderen Worten, die Vorspannfeder bewirkt eine in der Umfangsrichtung orientierte Vorspannung zwischen Übertragungselement einerseits und Verbindungselement bzw. Antriebswelle andererseits. Durch diese Maßnahme kann insbesondere ein in der Umfangsrichtung gegebenenfalls vorhandenes Spiel zwischen Übertragungselement und Verbindungselement eliminiert werden. Je nach Abstützung der Vorspannfeder kann dadurch auch ein ggf. vorhandenes Spiel in der Umfangsrichtung zwischen Antriebswelle und Verbindungselement eliminiert werden.

Die drehfeste und axial verstellbare Verbindung des Übertragungselements mit der Abtriebswelle einerseits und mit dem Verbindungselement andererseits kann in der Umfangsrichtung ein Spiel aufweisen, um die axiale Verstellbarkeit zu gewährleisten. Insofern ist der Begriff "drehfest" so zu verstehen, dass auch minimale Drehverstellungen, nämlich im Rahmen dieses ggf. in der Umfangsrichtung vorhandenen Spiels möglich sind. Eine starre Verbindung kommt aufgrund der axialen Verstellbarkeit ohnehin nicht in Betracht.

Die Vorspannfeder kann beispielsweise als gewendelte Drahtfeder bzw. als Wendelfeder konzipiert sein. Dabei kann der zugehörige Federdraht schraubenförmig und/oder spiralförmig gewendelt sein. Besonders preiswert ist eine Ausführungsform, bei welcher die Vorspannfeder als Schraubenfeder konfiguriert ist. Die Enden des jeweiligen Federdrahts, die hierzu vom übrigen Federkörper abgewinkelt sind, lassen sich besonders einfach dazu nutzen, am Übertragungselement bzw. am Verbindungselement oder an der Antriebswelle eine drehfeste Abstützung der Vorspannfeder zu erzielen.

Gemäß einer vorteilhaften Weiterbildung kann das Übertragungselement an seiner Rückseite eine Drehmoment aufnehmende Stützkontur aufweisen, an der sich die Vorspannfeder drehfest abstützt. Diese Stützkontur kann dabei beispielsweise durch eine axiale Vertiefung gebildet sein, die in einem die Federaufnahme einfassenden, axial vorstehenden Umlauf ausgebildet ist. Beispielsweise kann in diese Vertiefung ein entsprechend abgewinkelter Endabschnitt eines Federdrahts der Vorspannfeder eingesetzt sein, die hierzu beispielsweise als schraubenförmige und/oder spiralförmige Wendelfeder ausgestaltet ist. Hierdurch erhält das Übertragungselement eine vergleichsweise hohe Funktionsdichte.

Erfindungsgemäß weist das Übertragungselement einen zylindrischen Körper auf, der einen in der Umfangsrichtung geschlossen umlaufenden, radial abstehenden Kragen aufweist. Durch diesen umlaufenden Kragen wird ein senkrecht zur Axialrichtung verlaufender Querschnitt des Körpers vergrößert, wodurch sich auch die Sperrwirkung des Übertragungselements für axial orientierte Wärmestrahlung vergrößert, die von der Antriebswelle in Richtung Abtriebswelle abstrahlt. Insofern verbessert der umlaufende Kragen die thermische Schutzwirkung für den Elektroantrieb.

Bei einer anderen Ausführungsform kann das Übertragungselement zumindest zwei radial abstehende Mitnehmer aufweisen, die jeweils radial in eine am Verbindungselement ausgebildete Mitnehmeröffnung drehfest und axial verstellbar eingreifen. Hierdurch wird eine effiziente drehfeste und axial verstellbare Verbindung zwischen Übertragungselement und Verbindungselement geschaffen, die sich durch minimale Kontaktstellen auszeichnet, was die direkte Wärmeübertragung durch Wärmeleitung zwischen Verbindungselement und Übertragungselement reduziert.

Bei einer vorteilhaften Weiterbildung können die genannten Mitnehmer vom vorstehend genannten Kragen radial abstehen. Zusätzlich oder alternativ kann sich der Kragen unmittelbar an der Vorderseite des Körpers befinden. Durch diese Maßnahmen wird jeweils eine einfache Geometrie für das Übertragungselement geschaffen.

Bei einer anderen Weiterbildung kann das Verbindungselement U-förmig ausgestaltet sein und demnach zwei U-Schenkel sowie eine die U-Schenkel miteinander verbindende U-Basis aufweisen. Jeder dieser U-Schenkel weist eine solche Mitnehmeröffnung auf, während die U-Basis drehfest mit der Antriebswelle verbunden ist.

Die drehfeste Verbindung zwischen Verbindungselement und Antriebswelle kann beispielsweise mittels eines Presssitzes zwischen einer am Verbindungselement ausgebildeten Wellenöffnung und der Antriebswelle oder durch eine unrunde, insbesondere polygone, Geometrie an besagter Wellenöffnung und einem darin angesteckten Endabschnitt der Antriebswelle gebildet sein.

Bei einer anderen vorteilhaften Ausführungsform kann das Übertragungselement aus einem Material bestehen, dessen Wärmeleitfähigkeit kleiner ist als die Wärmeleitfähigkeit der Materialien, aus denen die Antriebswelle, die Vorspannfeder und das Verbindungselement bestehen. Auch diese Maßnahme führt dazu, dass die Wärmeleitung durch die Kopplungseinrichtung auf die Abtriebswelle und somit zum Elektroantrieb reduziert ist.

Zusätzlich oder alternativ kann das Übertragungselement aus einem Material bestehen, dessen Wärmeleitfähigkeit bei 0°C kleiner ist als 10 W/mK, wobei W für Watt, m für Meter und K für Kelvin stehen. Vorzugsweise kann das Material, aus dem das Übertragungselement besteht, eine Wärmeleitfähigkeit von maximal 5 W/mK besitzen. Im Vergleich dazu besitzt unlegierter Stahl eine Wärmeleitfähigkeit von etwa 50 W/mK, während Aluminium eine Wärmeleitfähigkeit von über 200 W/mK und Kupfer eine Wärmeleitfähigkeit von über 300 W/mK besitzen. Dementsprechend wirkt das Übertragungselement wie ein thermischer Isolator. Insbesondere kann das Übertragungselement aus einer Keramik bestehen, beispielsweise aus Zirkonoxid. Alternativ kann es sich beim Übertragungselement auch um einen Kunststoffkörper handeln, z.B. aus PEEK (Polyetheretherketon).

Das Übertragungselement, das Verbindungselement und die Vorspannfeder bilden relativ zueinander separate Bauteile. Ferner ist jedes dieser Bauteile für sich genommen einteilig bzw. aus einem Stück hergestellt. Diese Bauteile sind somit nicht aus mehreren Einzelteilen zusammengebaut. Insbesondere ist das Übertragungselement durch ein einziges Gussteil oder Sinterteil gebildet. Das Verbindungselement ist beispielsweise aus einem einzigen Blechkörper mittels Umformtechnik hergestellt. Die Vorspannfeder ist insbesondere aus einem einzigen Federdraht durch Umformung hergestellt.

Besonders vorteilhaft ist nun eine Ausführungsform, bei welcher die Kopplungseinrichtung ausschließlich durch das Übertragungselement, das Verbindungselement und die Vorspannfeder gebildet ist. Demnach besitzt die Kopplungseinrichtung nur drei Bauteile. Hierdurch lässt sich die Kopplungseinrichtung und somit die elektrische Abgasklappeneinrichtung vergleichsweise preiswert herstellen.

Ein erfindungsgemäßer Schalldämpfer, der für eine Abgasanlage einer Brennkraftmaschine vorgesehen ist, umfasst ein Abgasrohr sowie eine elektrische Abgasklappeneinrichtung der vorstehend beschriebenen Art, wobei die Abgasklappeneinrichtung zum Steuern des durchströmbaren Querschnitts des Abgasrohrs so an das Abgasrohr angebaut ist, dass die Abgasklappe im Querschnitt des Abgasrohrs um die Drehachse drehbar angeordnet ist.

Eine erfindungsgemäße Abgasanlage, die für eine Brennkraftmaschine, insbesondere eines Kraftfahrzeugs, vorgesehen ist, umfasst zumindest ein Abgasrohr und zumindest eine elektrische Abgasklappeneinrichtung der vorstehend beschriebenen Art, wobei die jeweilige Abgasklappeneinrichtung zum Steuern des durchströmbaren Querschnitts des jeweiligen Abgasrohrs so an das Abgasrohr angebaut ist, dass die Abgasklappe im Querschnitt des Abgasrohrs um die Drehachse drehbar angeordnet ist.

Die Drehachse kann sich dann zweckmäßig senkrecht zu einer Längsmittelachse des Abgasrohrs erstrecken. Bei einer als Schmetterlingsklappe ausgestalteten Abgasklappe erstreckt sich die Antriebswelle etwa mittig durch die, vorzugsweise bezüglich der Antriebswelle symmetrische, Klappenblende. Ferner erstreckt sich die Drehachse etwa mittig durch das Abgasrohr.

Gemäß einer vorteilhaften Weiterbildung des Schalldämpfers bzw. der Abgasanlage kann die Antriebswelle axial beiderseits der Abgasklappe jeweils in einem Lager drehbar gelagert sein, das am Abgasrohr befestigt ist. Hierdurch wird für die Abgasklappeneinrichtung eine hohe Funktionssicherheit und Zuverlässigkeit erreicht.

Im vorliegenden Zusammenhang beziehen sich die Richtungsangaben "axial", "radial" und "Umfangsrichtung" auf die Drehachse der Abtriebswelle des Elektroantriebs. Diese Drehachse definiert die Axialrichtung, die sich parallel zur Drehachse erstreckt. Durch die Axialrichtung sind dann auch die Radialrichtung und die Umfangsrichtung definiert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Ansprüche zu verlassen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine teilweise geschnittene Ansicht einer elektrischen Abgasklappeneinrichtung in einem Schalldämpfer bzw. in einer Abgasanlage,
- Fig. 2: eine vergrößerte Ansicht eines Details II in Fig. 1,
- Fig. 3: eine Seitenansicht eines Übertragungselements entsprechend einer Blickrichtung III in den Fig. 4 und 6,
- Fig. 4: eine Ansicht von oben des Übertragungselements entsprechend einer Blickrichtung IV in Fig. 3,
- Fig. 5: einen Längsschnitt des Übertragungselements entsprechend Schnittlinien V in Fig. 4,
- Fig. 6: eine Ansicht von unten des Übertragungselements entsprechend einer Blickrichtung VI in Fig. 3, und
- Fig. 7: eine Seitenansicht des Übertragungselements in einer Blickrichtung VII in Fig. 3.

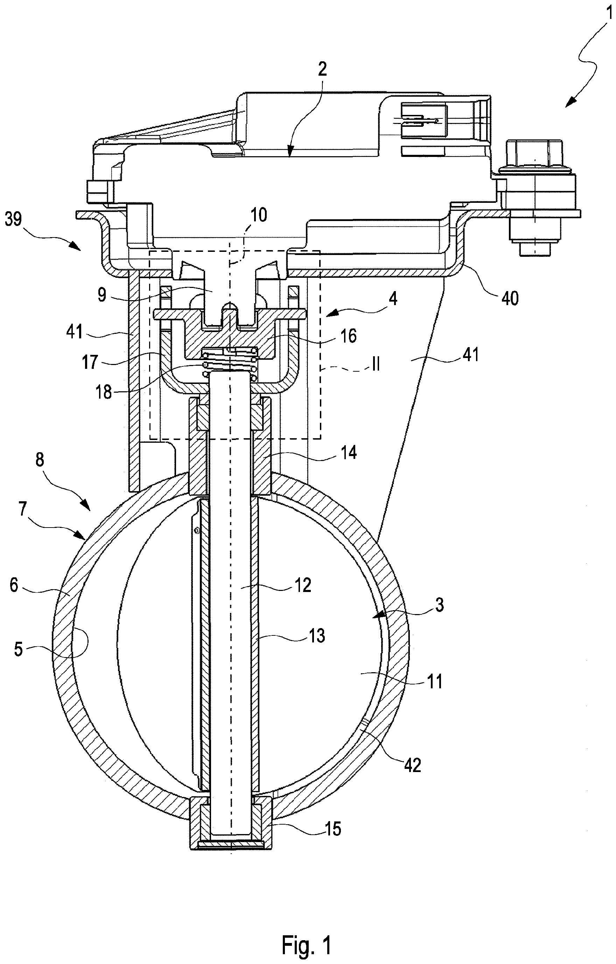

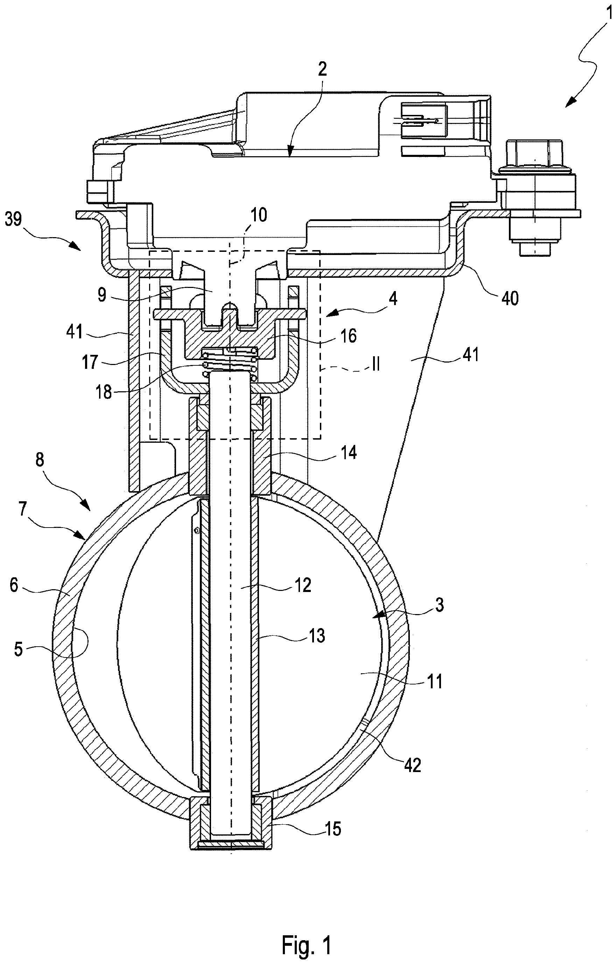

Entsprechend Fig. 1 umfasst eine elektrische Abgasklappeneinrichtung 1 einen Elektroantrieb 2, eine Abgasklappe 3 und eine Kopplungseinrichtung 4, um den Elektroantrieb 2 mit der Abgasklappe 3 antriebsmäßig zu koppeln. Die Abgasklappeneinrichtung 1 dient zum Steuern eines durchströmbaren Querschnitts 5 eines Abgasrohrs 6, das einen Bestandteil eines Schalldämpfers 7 und/oder einen Bestandteil einer Abgasanlage 8 sein kann. Die Abgasanlage 8 dient in üblicher Weise zum Abführen von Abgas von einer Brennkraftmaschine, die insbesondere in einem Kraftfahrzeug angeordnet sein kann.

Der Elektroantrieb 2 weist eine Abtriebswelle 9 auf, die vom Elektroantrieb 2 um eine Drehachse 10 drehend antreibbar ist. Die Abgasklappe 3 besitzt eine Klappenblende 11 zum Steuern des zu steuernden Querschnitts 5 sowie eine Antriebswelle 12. Die Antriebswelle 12 ist koaxial zur Drehachse 10 ausgerichtet, so dass deren Längsmittelachse mit der Drehachse 10 zusammenfällt. Die Abgasklappe 3 ist um die Drehachse 10 zum Steuern des zu steuernden Querschnitts 5 verdrehbar. Hierzu wird die Antriebswelle 12 um die Drehachse 10 verdreht. Dabei wird die drehfest an der Antriebswelle 12 angebrachte Klappenblende 11 mit verdreht. In Fig. 1 ist die Klappenblende 11 rechts von der Antriebswelle 12 in einer Schließstellung dargestellt, während sie links von der Antriebswelle 12 in einer halb geöffneten Offenstellung wiedergegeben ist. Vorzugsweise ist die Klappenblende 11 jedoch so konfiguriert, dass sie in einer Ebene liegt, in der auch die Drehachse 10 liegt. Im Beispiel ist die Klappenblende 11 an die Antriebswelle 12 angebaut, wozu die Klappenblende 11 einen damit fest verbundenen hülsenförmigen Zentralbereich 13 aufweist, der auf die Antriebswelle 12 axial aufgeschoben ist und auf geeignete Weise damit fest verbunden ist. Der Zentralbereich 13 kann integral an der Klappenblende 11 ausgeformt sein, insbesondere sind Klappenblende 11 und Zentralbereich 13 durch ein einziges Blechformteil gebildet. Ferner ist im Beispiel die Abgasklappe 3 als Schmetterlingsklappe konfiguriert, bei der sich die Antriebswelle 12 mittig bzw. zentral durch die Klappenblende 11 erstreckt. Grundsätzlich sind jedoch auch andere Bauformen für derartige Abgasklappen 3 denkbar, z.B. mit einer exzentrisch, insbesondere randseitig, an der Klappenblende 11 angeordneten Antriebswelle 12.

Das Abgasrohr 6 umschließt den mittels der Klappenblende 11 steuerbaren Querschnitt 5. Bezüglich der Klappenblende 11 bildet das Abgasrohr auch ein Gehäuse, in dem die Klappenblende 11 angeordnet und an dem die Abgasklappe 3 drehbar gelagert ist.

Die hier vorgestellte Abgasklappeneinrichtung 1 besteht somit im Wesentlichen aus dem Elektroantrieb 2 mit der Abtriebswelle 9 und einer Klappenbaugruppe 39, welche die Abgasklappe 3 und die Kopplungseinrichtung 4 aufweist. Im Beispiel der Fig. 1 umfasst die Klappenbaugruppe 39 außerdem eine Antriebshalterung 40 zur Aufnahme des Elektroantriebs 2, die über eine Tragstruktur 41 fest mit dem Abgasrohr 6 verbunden ist. Elektroantrieb 2 und Klappenbaugruppe 39 bilden dadurch separat herstellbare und vormontierbare Einheiten.

Zur drehbaren Lagerung der Abgasklappe 3 sind im Beispiel der Fig. 1 zwei Lager 14, 15 vorgesehen, in denen die Antriebswelle 12 beiderseits der Klappenblende 11 gelagert ist. Die beiden Lager 14, 15 sind dabei am Abgasrohr 6 befestigt, wobei das eine Lager 14 an einer dem Elektroantrieb 2 zugewandten Seite des Abgasrohrs 6 angeordnet und somit zum Elektroantrieb 2 proximal angeordnet ist, während das andere Lager 15 an einer vom Elektroantrieb 2 abgewandten Seite des Abgasrohrs 6 und somit zum Elektroantrieb 2 distal angeordnet ist. Im Folgenden können die beiden Lager 14, 15 daher auch als proximales Lager 14 bzw. distales Lager 15 bezeichnet werden. Das proximale Lager 14 besitzt eine axial größere Baulänge als das distale Lager 15, wodurch die Wärmeübertragung vom Abgasrohr 6 über das proximale Lager 14 in Richtung Elektroantrieb 2 reduziert ist.

In der Schnittansicht der Fig. 1 ist außerdem ein Endanschlag 42 erkennbar, an dem die Klappenblende 11 in ihrer Schließstellung zur Anlage kommt.

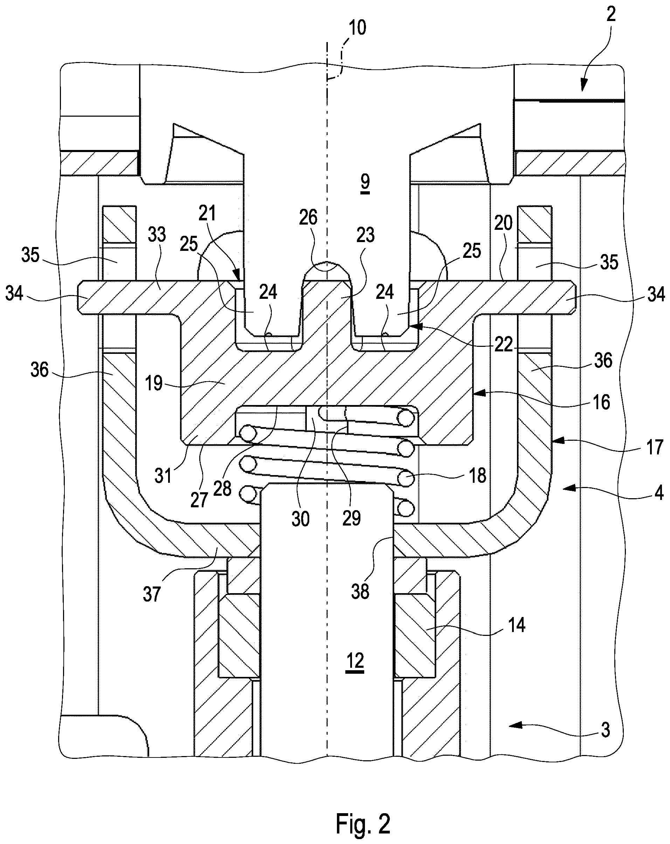

Gemäß den Fig. 1 und 2 dient die Kopplungseinrichtung 4 zum Übertragen von Drehmomenten zwischen der Abtriebswelle 9 und der Antriebswelle 12. Hierzu ist die Kopplungseinrichtung 4 einerseits mit der Abtriebswelle 9 und andererseits mit der Antriebswelle 12 drehfest verbunden. Die Kopplungseinrichtung 4 umfasst im Einzelnen ein Übertragungselement 16, ein Verbindungselement 17 und eine Vorspannfeder 18. Das Verbindungselement 17 ist drehfest mit der Antriebswelle 12 verbunden. Das Übertragungselement 16 ist einerseits drehfest und axial verstellbar mit der Abtriebswelle 9 und andererseits drehfest und axial verstellbar mit dem Verbindungselement 17 verbunden. Die Vorspannfeder 18 ist einerseits am Übertragungselement 16 und andererseits am Verbindungselement 17 und/oder an der Antriebswelle 12 jeweils axial abgestützt. Ferner ist die Vorspannfeder 18 als Druckfeder ausgestaltet, so dass sie das Übertragungselement 16 gegen die Abtriebswelle 9 axial vorspannt, also antreibt. Diese axial vorgespannte Montage der Vorspannfeder 18 eliminiert zu einen sämtliches Axialspiel in der Antriebsverbindung zwischen Antriebswelle 12 und Abtriebswelle 9. Zum anderen kann die Vorspannfeder 18 auf diese Weise thermisch bedingte axiale Dehnungseffekte kompensieren, welche die axiale Relativlage zwischen Antriebswelle 12 und Abtriebswelle 9 verändern.

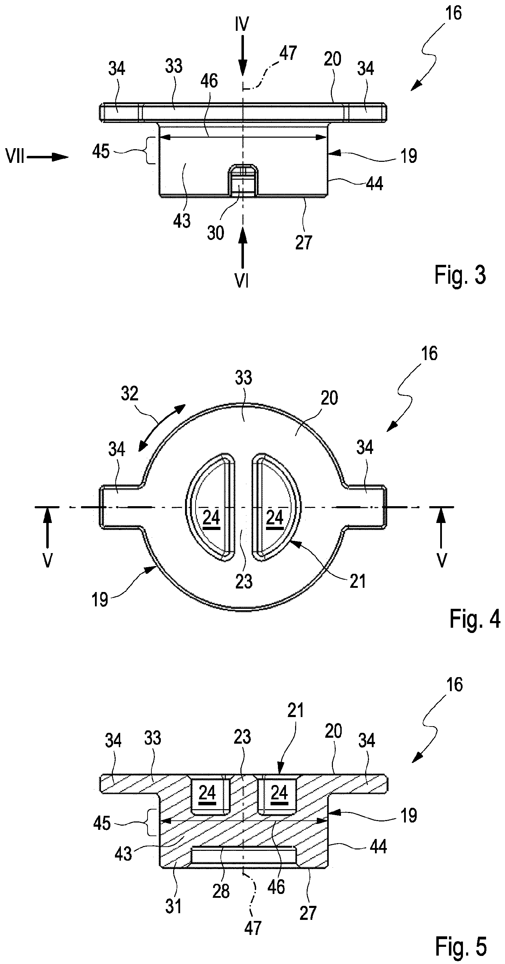

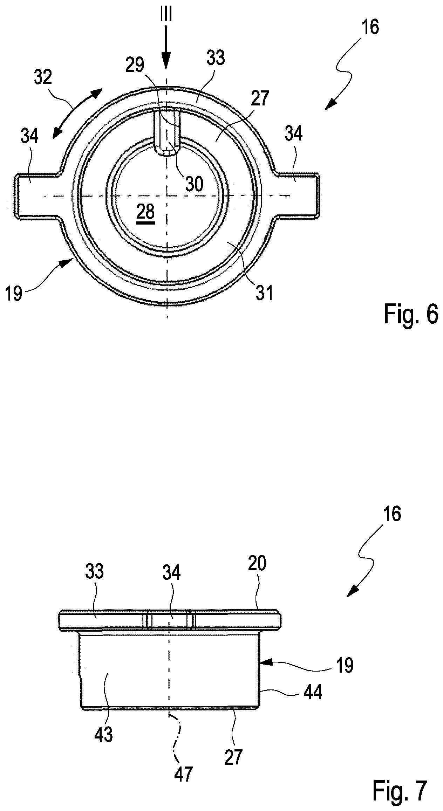

Entsprechend den Fig. 2 bis 7 besitzt das Übertragungselement 16 einen Körper 19, der vorzugsweise zylindrisch ausgestaltet ist. Der Körper 19 ist axial geschlossen. Der Körper 19 besitzt in seinem Inneren 43 somit keine axial durchgehende Öffnung. Der Körper 19 weist gemäß den Fig. 3 und 5 eine in einer in den Fig. 4 und 6 durch einen Doppelpfeil angedeuteten Umfangsrichtung 32 geschlossen umlaufende Außenkontur 44 auf. In einem in den Fig. 3 und 5 durch eine geschweifte Klammer gekennzeichneten Axialabschnitt 45 besitzt der Körper 19 einen Querschnitt 46, der senkrecht zur Axialrichtung 47 verläuft und der radial innerhalb der Außenkontur 44 vollständig geschlossen ist. Sofern der Körper 19 wie im gezeigten Beispiel kreiszylindrisch ausgestaltet ist, erstreckt sich die Außenkontur 44 in besagtem Axialabschnitt 45 kreisringförmig und der Querschnitt 46 ist kreisförmig. Insoweit ist der Körper 19 in der Axialrichtung insbesondere für axial orientierte Wärmestrahlung, die im Betrieb der Abgasanlage 8 von der Antriebswelle 12 emittiert wird, undurchlässig.

Der Körper 19 des Übertragungselements 16 weist eine der Abtriebswelle 9 zugewandte Vorderseite 20 auf, in der eine Eingriffskontur 21 ausgebildet ist. Mit dieser Eingriffskontur 21 steht eine dazu komplementär geformte Gegeneingriffskontur 22 in Eingriff, die an einem Endabschnitt der Abtriebswelle 9 ausgebildet ist. Die Gegeneingriffskontur 22 greift axial in die Eingriffskontur 21 ein und steht damit drehfest und axial verstellbar in Eingriff. Im gezeigten Beispiel ist die Eingriffskontur 21 gemäß Fig. 4 durch einen kreisförmigen, vertieften Bereich gebildet, der mittig durch einen durchgehenden Steg 23 in zwei separate etwa halbkreisförmige Vertiefungen 24 aufgeteilt ist. Die Gegeneingriffskontur 22 besitzt gemäß Fig. 2 komplementär dazu zwei Fortsätze 25, die jeweils axial in eine dieser Vertiefungen 24 eingreifen und die zentral durch eine Lücke 26 voneinander beabstandet sind, in die der Steg 23 axial eingreift.

Der Körper 19 des Übertragungselements 16 besitzt außerdem eine der Antriebswelle 12 zugewandte Rückseite 27, in der eine Federaufnahme 28 ausgebildet ist, und zwar ebenfalls in Form einer axialen Vertiefung, in welche die Vorspannfeder 18 axial eintaucht und in der sich die Vorspannfeder 18 axial am Körper 19 abstützt.

Bevorzugt ist eine Ausführungsform, bei welcher die Vorspannfeder 18 einerseits am Übertragungselement 16 und andererseits am Verbindungselement 17 und/oder an der Antriebswelle 12 drehfest abgestützt ist und außerdem in der Umfangsrichtung 32 vorgespannt ist. Somit ist die Vorspannfeder 18 zweckmäßig außerdem zusätzlich zur axialen Vorspannung mit einer Torsionsvorspannung montiert. Durch die Torsionsvorspannung lässt sich sämtliches Spiel in Umfangsrichtung eliminieren, das innerhalb der Kopplungseinrichtung 4 vorhanden sein kann. Die Vorspannfeder 18 ist im Beispiel als Schraubenfeder konfiguriert, die für eine Torsionsvorspannung um die Drehachse 10 verdreht ist.

Das Übertragungselement 16 besitzt für die Vorspannfeder 18 eine Stützkontur 29, die Drehmoment aufnehmen kann und somit die drehfeste Abstützung der Vorspannfeder 18 am Übertragungselement 16 ermöglicht. Im Beispiel ist diese Stützkontur 29 durch eine axiale Vertiefung 30 gebildet, die in einem Umlauf 31 ausgebildet ist, der die Federaufnahme 28 in der Umfangsrichtung 32 einfasst und der axial vom übrigen Körper 19 vorsteht.

Beim hier gezeigten bevorzugten Ausführungsbeispiel ist das Übertragungselement 16 an seinem Körper 19 außerdem mit einem Kragen 33 ausgestattet, der radial vom zylindrischen Körper 19 absteht und in der Umfangsrichtung 32 geschlossen umläuft. Im gezeigten Beispiel ist der Kragen 33 an der Vorderseite 20 ausgebildet. Der Kragen 33 vergrößert den Querschnitt des Übertragungselements 16 und behindert dadurch eine Wärmestrahlung von der Antriebswelle 12 zur Abtriebswelle 9.

Das Übertragungselement 16 weist außerdem im Beispiel genau zwei radial abstehende Mitnehmer 34 auf, die zueinander diametral angeordnet sind und die jeweils radial in eine Mitnehmeröffnung 35 eingreifen und sogar durch diese hindurchgreifen. Diese Mitnehmeröffnungen 35 sind am Verbindungselement 17 ausgebildet und sind im Beispiel durch axial orientierte Langlöcher gebildet. Die Mitnehmer 34 greifen in die Mitnehmeröffnungen 35 drehfest und axial verstellbar ein, wodurch die gewünschte drehfeste und axial verstellbare Verbindung zwischen Übertragungselement 16 und Verbindungselement 17 gebildet ist. Im Beispiel der hier gezeigten Ausführungsform sind die Mitnehmer 34 an besagtem Kragen 33 ausgebildet, so dass sie vom Kragen 33 radial nach außen abstehen.

Gemäß Fig. 2 ist das Verbindungselement 17 in der in Fig. 2 wiedergegebenen Schnittebene U-förmig ausgestaltet, so dass es zwei U-Schenkel 36 und eine U-Basis 37 besitzt, welche die beiden U-Schenkel 36 miteinander verbindet. Die beiden U-Schenkel 36 weisen jeweils eine solche Mitnehmeröffnung 35 auf. Die U-Basis 37 ist drehfest mit der Antriebswelle 12 verbunden. Hierzu besitzt die U-Basis 37 bzw. das Verbindungselement 17 eine Wellenöffnung 38, durch die ein Endabschnitt der Antriebswelle 12 hindurchgesteckt ist. Die drehfeste Verbindung im Bereich dieser Wellenöffnung 38 kann durch einen Presssitz oder durch Formschluss in Verbindung mit einem unrunden bzw. eckigen bzw. polygonalen Querschnitt von Antriebswelle 12 und Verbindungselement 17 im Bereich der Wellenöffnung 38 realisiert sein.

Das Übertragungselement 16 besteht vorzugsweise aus einer Keramik, zum Beispiel aus Zirkonoxid. Denkbar ist auch die Verwendung eines Übertragungselements aus PEEK. Das Übertragungselement 16 besteht vorzugsweise aus einem Material, dessen Wärmeleitfähigkeit kleiner ist als die Wärmeleitfähigkeit der Materialien, aus denen die Antriebswelle 12, das Verbindungselement 17 und die Vorspannfeder 18 hergestellt sind. Insbesondere besitzt das Übertragungselement 16 eine Wärmeleitfähigkeit, die bei 0°C kleiner ist als 10 W/mK und vorzugsweise kleiner ist als 5 W/mK.

Gemäß den Fig. 1 und 2 umfasst die Kopplungseinrichtung 4 genau drei separate Bauteile, nämlich das Übertragungselement 16, das Verbindungselement 17 und die Vorspannfeder 18. Hierdurch lässt sich die Kopplungseinrichtung 4 vergleichsweise preiswert herstellen.

## Patentansprüche

1. Elektrische Abgasklappeneinrichtung zum Steuern eines durchströmbaren Querschnitts (5) eines Abgasrohrs (6) einer Abgasanlage (8) einer Brennkraftmaschine,
- mit einem Elektroantrieb (2), der eine Abtriebswelle (9) aufweist, die vom Elektroantrieb (2) um eine Drehachse (10) drehend antreibbar ist,
- mit einer Abgasklappe (3), die eine koaxial zur Drehachse (10) ausgerichtete Antriebswelle (12) aufweist und die zum Steuern des zu steuernden Querschnitts (5) um die Drehachse (10) verdrehbar ist,
- mit einer Kopplungseinrichtung (4) zum Übertragen von Drehmomenten zwischen der Abtriebswelle (9) und der Antriebswelle (12),
- wobei die Kopplungseinrichtung (4) ein drehfest mit der Antriebswelle (12) verbundenes Verbindungselement (17) aufweist,
- wobei die Kopplungseinrichtung (4) ein drehfest und axial verstellbar mit der Abtriebswelle (9) sowie drehfest und axial verstellbar mit dem Verbindungselement (17) verbundenes Übertragungselement (16) aufweist, und
- wobei die Kopplungseinrichtung (4) eine am Verbindungselement (17) und/oder an der Antriebswelle (12) sowie am Übertragungselement (16) axial abgestützte, das Übertragungselement (16) gegen die Abtriebswelle (9) axial antreibende Vorspannfeder (18) aufweist, worin das Übertragungselement (16) aus einem Stück hergestellt ist,
**dadurch gekennzeichnet,**
**dass** das Übertragungselement (16)
einen zylindrischen Körper (19) aufweist, der einen in Umfangsrichtung (32) geschlossen umlaufenden, radial abstehenden Kragen (33) aufweist.

2. Abgasklappeneinrichtung nach Anspruch 1,
**dadurch gekennzeichnet,**
**dass** das Übertragungselement (16) einen Körper (19) aufweist, der axial geschlossen ist.

3. Abgasklappeneinrichtung nach Anspruch 1 oder 2,
**dadurch gekennzeichnet,**
**dass** das Übertragungselement (16) einen Körper (19) aufweist, der in seinem Inneren (43) keine axial durchgehende Öffnung aufweist.

4. Abgasklappeneinrichtung nach einem der Ansprüche 1 bis 3,
**dadurch gekennzeichnet,**
**dass** das Übertragungselement (16) aus einem Material besteht, dessen Wärmeleitfähigkeit kleiner ist als die Wärmeleitfähigkeit der Materialien, aus denen die Antriebswelle (12), die Vorspannfeder (18) und das Verbindungselement (17) bestehen.

5. Abgasklappeneinrichtung nach einem der Ansprüche 1 bis 4,
**dadurch gekennzeichnet,**
- **dass** das Übertragungselement (16) einen Körper (19) aufweist, der an einer der Abtriebswelle (9) zugewandten Vorderseite (20) eine Eingriffskontur (21) aufweist, die mit einer an der Abtriebswelle (9) ausgebildeten Gegeneingriffskontur (22) drehfest und axial verstellbar in Eingriff steht,
- **dass** das Übertragungselement (16) einen Körper (19) aufweist, der an einer der Antriebswelle (12) zugewandten Rückseite (27) eine Federaufnahme (28) aufweist, in der sich die Vorspannfeder (18) axial am Körper (19) abstützt,
- **dass** die Vorspannfeder (18) einerseits am Übertragungselement (16) und andererseits am Verbindungselement (17) und/oder an der Antriebswelle (12) unter Torsionsvorspannung drehfest abgestützt ist.

6. Abgasklappeneinrichtung nach Anspruch 5,
**dadurch gekennzeichnet,**
- **dass** das Übertragungselement (16) an seiner Rückseite (27) eine Drehmoment aufnehmende Stützkontur (29) aufweist, an der sich die Vorspannfeder (18) drehfest abstützt,
- **dass** die Stützkontur (29) durch eine axiale Vertiefung (30) gebildet ist, die in einem die Federaufnahme (28) einfassenden, axial vorstehenden Umlauf (31) ausgebildet ist.

7. Abgasklappeneinrichtung nach einem der Ansprüche 1 bis 6,
**dadurch gekennzeichnet,**
**dass** das Übertragungselement (16) einen zylindrischen Körper (19) aufweist, der zumindest in einem senkrecht zur Axialrichtung verlaufenden Querschnitt eine ringförmig geschlossen umlaufende Außenkontur (44) besitzt, wobei der Körper (19) in diesem Querschnitt radial innerhalb der Außenkontur (44) axial vollständig geschlossen ist.

8. Abgasklappeneinrichtung nach einem der Ansprüche 1 bis 7,
**dadurch gekennzeichnet,**
**dass** das Übertragungselement (16) zumindest zwei radial abstehende Mitnehmer (34) aufweist, die jeweils radial in eine am Verbindungselement (17) ausgebildete Mitnehmeröffnung (35) drehfest und axial verstellbar eingreifen.

9. Abgasklappeneinrichtung nach Anspruch 8,
**dadurch gekennzeichnet,**
**dass** die Mitnehmer (34) radial vom Kragen (33) abstehen.

10. Abgasklappeneinrichtung nach Anspruch 8 oder 9,
**dadurch gekennzeichnet,**
- **dass** das Verbindungselement (17) U-förmig ausgestaltet ist und zwei U-Schenkel (36) sowie eine die U-Schenkel (36) miteinander verbindende U-Basis (37) aufweist,
- **dass** jeder U-Schenkel (36) jeweils eine solche Mitnehmeröffnung (35) aufweist,
- **dass** die U-Basis (37) drehfest mit der Antriebswelle (12) verbunden ist.

11. Abgasklappeneinrichtung nach einem der Ansprüche 1 bis 10,
**dadurch gekennzeichnet,**
**dass** die Kopplungseinrichtung (4) durch das Übertragungselement (16), das Verbindungselement (17) und die Vorspannfeder (18) gebildet ist.

12. Schalldämpfer für eine Abgasanlage (8) einer Brennkraftmaschine, mit einem Abgasrohr (6) und mit einer elektrischen Abgasklappeneinrichtung (1) nach einem der Ansprüche 1 bis 11, die zum Steuern des durchströmbaren Querschnitts (5) des Abgasrohrs (6) so an das Abgasrohr (6) angebaut ist, dass eine Klappenblende (11) der Abgasklappe (3) im Querschnitt (5) des Abgasrohrs (6) um die Drehachse (10) drehbar angeordnet ist.

13. Abgasanlage für eine Brennkraftmaschine, mit mindestens einem Abgasrohr (6) und mit mindestens einer elektrischen Abgasklappeneinrichtung (1) nach einem der Ansprüche 1 bis 11, die zum Steuern des durchströmbaren Querschnitts (5) eines solchen Abgasrohrs (6) so an diesem Abgasrohr (6) angebaut ist, dass eine Klappenblende (11) der Abgasklappe (3) im Querschnitt (5) des Abgasrohrs (6) um die Drehachse (10) drehbar angeordnet ist.

14. Schalldämpfer nach Anspruch 12,
**dadurch gekennzeichnet,**
**dass** die Antriebswelle (12) axial beiderseits der Klappenblende (11) jeweils in einem Lager (14, 15) drehbar gelagert ist, das am Abgasrohr (6) befestigt ist.

15. Abgasanlage nach Anspruch 13,
**dadurch gekennzeichnet,**
**dass** die Antriebswelle (12) axial beiderseits der Klappenblende (11) jeweils in einem Lager (14, 15) drehbar gelagert ist, das am Abgasrohr (6) befestigt ist.

## Claims

1. An electric exhaust valve device for controlling a cross-section (5), able to be flowed through, of an exhaust pipe (6) of an exhaust system (8) of an internal combustion engine,
- with an electric drive (2), which has an output shaft (9), which is able to be driven rotatingly about a rotation axis (10) by the electric drive (2),
- with an exhaust valve (3), which has a drive shaft (12) aligned coaxially to the rotation axis (10) and which is rotatable about the rotation axis (10) for controlling the cross-section (5) which is to be controlled,
- with a coupling device (4) for the transferring of torques between the output shaft (9) and the drive shaft (12),
- wherein the coupling device (4) has a connecting element (17) connected with the drive shaft (12) in a torque-proof manner,
- wherein the coupling device (4) has a transmission element (16) connected in a torque-proof and axially adjustable manner with the output shaft (9) and in a torque-proof and axially adjustable manner with the connecting element (17) and
- wherein the coupling device (4) has a prestressing spring (18) supported axially on the connecting element (17) and/or on the drive shaft (12) and on the transmission element (16), axially driving the transmission element (16) against the output shaft (9),
- wherein the transmission element (16) is made from one piece,
**characterized in that**
- the transmission element (16) has a cylindrical body (19), which has a radially protruding collar (33), circumferential in a closed manner in circumferential direction (32).

2. The exhaust valve device according to Claim 1,
**characterized in that**
the transmission element (16) has a body (19), which is axially closed.

3. The exhaust valve device according to Claim 1 or 2,
**characterized in that**
the transmission element (16) has a body (19), which has no axially continuous opening in its interior (43).

4. The exhaust valve device according to one of Claims 1 to 3,
**characterized in that**
the transmission element (16) consists of a material, the thermal conductivity of which is less than the thermal conductivity of the materials of which the drive shaft (12), the prestressing spring (18) and the connecting element (17) consist.

5. The exhaust valve device according to one of Claims 1 to 4,
**characterized in that**
- the transmission element (16) has a body (19), which on a front side (20) facing the output shaft (9) has an engagement contour (21) which is in engagement in a torque-proof and axially adjustable manner with a counter-engagement contour (22) formed on the output shaft (9),
- the transmission element (16) has a body (19), which on a rear side (27) facing the drive shaft (12) has a spring seat (28), in which the prestressing spring (18) rests axially on the body (19),
- the prestressing spring (18) is supported on the one hand on the transmission element (16) and on the other hand on the connecting element (17) and/or on the drive shaft (12) under torsional prestressing in a torque-proof manner.

6. The exhaust valve device according to Claim 5,
**characterized in that**
- the transmission element (16) has on its rear side (27) a torque-receiving support contour (29), on which the prestressing spring (18) rests in a torque-proof manner,
- the support contour (29) is formed by an axial depression (30), which is formed in an axially protruding circumferential portion (31), surrounding the spring seat (28).

7. The exhaust valve device according to one of Claims 1 to 6,
**characterized in that**
the transmission element (16) has a cylindrical body (19), which at least in a cross-section running perpendicularly to the axial direction has an outer contour (44) which is circumferential in a ring-shaped closed manner, wherein the body (19) in this cross-section is closed axially completely radially within the outer contour (44).

8. The exhaust valve device according to one of Claims 1 to 7,
**characterized in that**
the transmission element (16) has at least two radially protruding carriers (34), which engage in a torque-proof and axially adjustable manner respectively radially into a carrier opening (35) formed on the connecting element (17).

9. The exhaust valve device according to Claim 8,
**characterized in that**
the carriers (34) protrude radially from the collar (33).

10. The exhaust valve device according to Claim 8 or 9,
**characterized in that**
- the connecting element (17) is configured in a U-shape and has two U-legs (36) and a U-base (37) connecting the U-legs (36) with one another,
- each U-leg (36) has respectively such a carrier opening (35),
- the U-base (37) is connected with the drive shaft (12) in a torque-proof manner.

11. The exhaust valve device according to one of Claims 1 to 10,
**characterized in that**
the coupling device (4) is formed by the transmission element (16), the connecting element (17) and the prestressing spring (18).

12. A silencer for an exhaust system (8) of an internal combustion engine, with an exhaust pipe (6) and with an electric exhaust valve device (1), according to one of Claims 1 to 11, which is mounted onto the exhaust pipe (6) for controlling the cross-section (5), able to be flowed through, of the exhaust pipe (6), so that a valve cover (11) of the exhaust valve (3) is rotatably arranged in the cross-section (5) of the exhaust pipe (6) about the rotation axis (10).

13. An exhaust system for an internal combustion engine, with at least one exhaust pipe (6) and with at least one electric exhaust valve device (1) according to one of Claims 1 to 11, which for controlling the cross-section (5), able to be flowed through, of such an exhaust pipe (6), is mounted on this exhaust pipe (6) so that a valve cover (11) of the exhaust valve (3) is rotatably arranged about the rotation axis (10) in the cross-section (5) of the exhaust pipe (6).

14. The silencer according to Claim 12,
**characterized in that**
the drive shaft (12) is rotatably mounted axially on both sides of the valve cover (11) respectively in a bearing (14, 15), which is fastened to the exhaust pipe (6).

15. The exhaust system according to Claim 13,
**characterized in that**
the drive shaft (12) is rotatably mounted axially on both sides of the valve cover (11) respectively in a bearing (14, 15), which is fastened to the exhaust pipe (6).

## Revendications

1. Dispositif de clapet de gaz d'échappement électrique pour commander une section transversale traversable par un flux (5) d'un tuyau d'échappement (6) d'un système d'échappement (8) d'un moteur à combustion interne,
- avec un entraînement électrique (2) qui présente un arbre de sortie (9) qui peut être entraîné en rotation autour d'un axe de rotation (10) par l'entraînement électrique (2),
- avec un clapet d'échappement (3) qui présente un arbre d'entraînement (12) orienté coaxialement par rapport à l'axe de rotation (10) et qui peut tourner autour de l'axe de rotation (10) pour commander la section transversale (5) à commander,
- avec un dispositif de couplage (4) pour transmettre des couples entre l'arbre de sortie (9) et l'arbre d'entraînement (12),
- dans lequel le dispositif de couplage (4) présente un élément de connexion (17) qui est connecté à l'arbre d'entraînement (12) de manière non rotative,
- dans lequel le dispositif de couplage (4) présente un élément de transmission (16) connecté de manière non rotative et réglable axialement à l'arbre de sortie (9) et de manière non rotative et réglable axialement à l'élément de connexion (17), et
- dans lequel le dispositif de couplage (4) présente un ressort de précontrainte (18) supporté axialement sur l'élément de connexion (17) et/ou sur l'arbre d'entraînement (12) ainsi que sur l'élément de transmission (16) et entraînant axialement l'élément de transmission (16) contre l'arbre de sortie (9),
dans lequel l'élément de transmission (16) est fabriqué d'une seule pièce, **caractérisé en ce que** l'élément de transmission (16) présente un corps cylindrique (19) qui présente un rebord (33) faisant saillie radialement l'entourant de manière fermée en direction circonférentielle (32).

2. Dispositif de clapet de gaz d'échappement selon la revendication 1,
**caractérisé en ce**
**que** l'élément de transmission (16) présente un corps (19) qui est fermé axialement.

3. Dispositif de clapet de gaz d'échappement selon la revendication 1 ou 2,
**caractérisé en ce**
**que** l'élément de transmission (16) présente un corps (19) qui ne présente pas d'ouverture axialement continue dans son intérieur (43).

4. Dispositif de clapet de gaz d'échappement selon l'une quelconque des revendications 1 à 3,
**caractérisé en ce**
**que** l'élément de transmission (16) est constitué d'un matériau dont la conductivité thermique est inférieure à la conductivité thermique des matériaux dont l'arbre d'entraînement (12), le ressort de précontrainte (18) et l'élément de transmission (17) sont constitués.

5. Dispositif de clapet de gaz d'échappement selon l'une quelconque des revendications 1 à 4,
**caractérisé en ce**
- **que** l'élément de transmission (16) présente un corps (19) qui, sur un côté avant (20) tourné vers l'arbre de sortie (9), présente un contour d'engagement (21) qui est en engagement de manière non rotative et réglable axialement avec un contour d'engagement antagoniste (22) formé sur l'arbre de sortie (9),
- **que** l'élément de transmission (16) présente un corps (19) qui, sur un côté arrière (27) tourné vers l'arbre d'entraînement (12), présente un logement de ressort (28) dans lequel le ressort de précontrainte (18) s'appuie axialement sur le corps (19),
- **que** le ressort de précontrainte (18) s'appuie de manière non rotative d'une part sur l'élément de transmission (16) et d'autre part sur l'élément de connexion (17) et/ou sur l'arbre d'entraînement (12) sous précontrainte de torsion.

6. Dispositif de clapet de gaz d'échappement selon la revendication 5,
**caractérisé en ce**
- **que** l'élément de transmission (16) présente sur son côté arrière (27) un contour d'appui (29) absorbant du couple, sur lequel le ressort de précontrainte (18) s'appuie de manière non rotative,
- **que** le contour d'appui (29) est formé par un évidement axial (30) qui est formé dans une circulation (31) faisant saillie axialement et entourant le logement de ressort (28).

7. Dispositif de clapet de gaz d'échappement selon l'une quelconque des revendications 1 à 6,
**caractérisé en ce**
**que** l'élément de transmission (16) présente un corps cylindrique (19) qui, au moins dans une section transversale s'étendant perpendiculairement à la direction axiale, comporte un contour extérieur circonférentiel fermé de manière annulaire (44), dans lequel le corps (19) est entièrement fermé axialement dans cette section transversale, radialement à l'intérieur du contour extérieur (44).

8. Dispositif de clapet de gaz d'échappement selon l'une quelconque des revendications 1 à 7,
**caractérisé en ce**
**que** l'élément de transmission (16) présente au moins deux entraîneurs (34) faisant saillie radialement, qui s'engagent respectivement radialement dans une ouverture d'entraînement (35) formée sur l'élément de connexion (17) de manière non rotative et réglable axialement.

9. Dispositif de clapet de gaz d'échappement selon la revendication 8,
**caractérisé en ce**
**que** les entraîneurs (34) font saillie radialement du rebord (33).

10. Dispositif de clapet de gaz d'échappement selon la revendication 8 ou 9,
**caractérisé en ce**
- **que** l'élément de connexion (17) est conçu en forme de U et présente deux branches en U (36) ainsi qu'une base en U (37) connectant les branches en U (36) l'une à l'autre,
- **que** chaque branche en U (36) présente respectivement une telle ouverture d'entraînement (35),
- **que** la base en U (37) est connectée à l'arbre d'entraînement (12) de manière non rotative.

11. Dispositif de clapet de gaz d'échappement selon l'une quelconque des revendications 1 à 10,
**caractérisé en ce**
**que** le dispositif de clapet de gaz d'échappement (4) est formé par l'élément de transmission (16), l'élément de connexion (17) et le ressort de précontrainte (18).

12. Silencieux pour un système d'échappement (8) d'un moteur à combustion interne, avec un tuyau d'échappement (6) et avec un dispositif de clapet de gaz d'échappement électrique (1) selon l'une quelconque des revendications 1 à 11 qui, pour commander la section transversale traversable par un flux (5) du tuyau d'échappement (6), est monté sur le tuyau d'échappement (6) de sorte qu'une ouverture de clapet (11) du clapet de gaz d'échappement (3) est disposée dans la section transversale (5) du tuyau d'échappement (6) pour pouvoir tourner autour de l'axe de rotation (10).

13. Système d'échappement pour un moteur à combustion interne, avec au moins un tuyau d'échappement (6) et avec au moins un dispositif de clapet de gaz d'échappement électrique (1) selon l'une quelconque des revendications 1 à 11 qui, pour commander la section transversale traversable par un flux (5) d'un tel tuyau d'échappement (6), est monté sur ce tuyau d'échappement (6) de sorte qu'une ouverture de clapet (11) du clapet de gaz d'échappement (3) est disposée dans la section transversale (5) du tuyau d'échappement (6) pour pouvoir tourner autour de l'axe de rotation (10).

14. Silencieux selon la revendication 12,
**caractérisé en ce**
**que** l'arbre d'entraînement (12) est monté respectivement axialement des deux côtés de l'ouverture de clapet (11) de manière rotative dans un palier (14, 15) qui est fixé au tuyau d'échappement (6).

15. Système d'échappement selon la revendication 13,
**caractérisé en ce**
**que** l'arbre d'entraînement (12) est monté respectivement axialement des deux côtés de l'ouverture de clapet (11) de manière rotative dans un palier (14, 15) qui est fixé au tuyau d'échappement (6).
